# EUROPEAN PATENT APPLICATION

(11) **EP 4 539 531 A1**
(43) Date of publication of application: **16.04.2025**
(21) Application number: 24206198.4
(22) Date of filing: 11.10.2024
(51) Int. Cl.: H04W 24/04, H04L 41/0654, H04W 88/08, H04W 92/04, H04L 41/0823, H04L 41/40, H04W 24/02, H04W 76/19, H04W 88/18, H04W 52/02

(54) **A METHOD TO SHUT DOWN AND RESTART RADIO UNITS IN OPEN-RAN CBRS NETWORKS**

(30) Priority: 13.10.2023 US 202363590113 P; 07.10.2024 US 202418907799
(71) Applicant: Mavenir Systems, Inc., Richardson, TX 75081 (US)
(72) Inventor: LEELAHAKRIENGKRAI, Rangsan, Allen, Texas 75013 (US); DEV, Abhilash, Bartlett, Illinois 60103 (US)
(74) Representative: dompatent von Kreisler Selting Werner - Partnerschaft von Patent- und Rechtsanwälten mbB

(57) **Abstract**

A system for optimizing shut-down and restart of an Open Radio Access Network (O-RAN) radio unit (O-RU) deployed in an O-RAN Citizens Broadband Radio Service (CBRS) network includes: spectrum access system (SAS); CBRS Domain Proxy (DP) located in a Centralized Data Center (CDC); Cloud Management Service (CMS) located in the CDC; a first CBRS Interface Monitoring and Alert (CIMA) located in the CDC; a second CIMA located in a Distributed Data Center (DDC);at least one O-RAN Distributed Unit (O-DU) located in the DDC; a plurality of O-RAN Radio Units (O-RUs) located in the DDC; and an O1 interface connecting the CDC and DDC. The second CIMA located in the DDC monitors the O1 interface connection to the DDC, and if a failure of the O1 interface lasts longer than a specified time duration Sd, alerts the at least one O-DU regarding the failure of the O1 interface.

## Description

### BACKGROUND OF THE INVENTION

### 1. Field of the Invention

The present disclosure is related to Open Radio Access Network (O-RAN) systems, and relates more particularly to O-RAN configuration for 4G and 5G Citizens Broadband Radio Service (CBRS) networks.

### 2. Description of Related Art

Citizens Broadband Radio Service (CBRS) is a wireless communication technology that operates in the 3.5 GHz band. CBRS was established by the Federal Communications Commission (FCC) in the United States to create a shared spectrum approach for wireless communication. CBRS is designed to support a wide range of applications, e.g., broadband access, Internet of Things (IoT) devices, and private wireless networks.

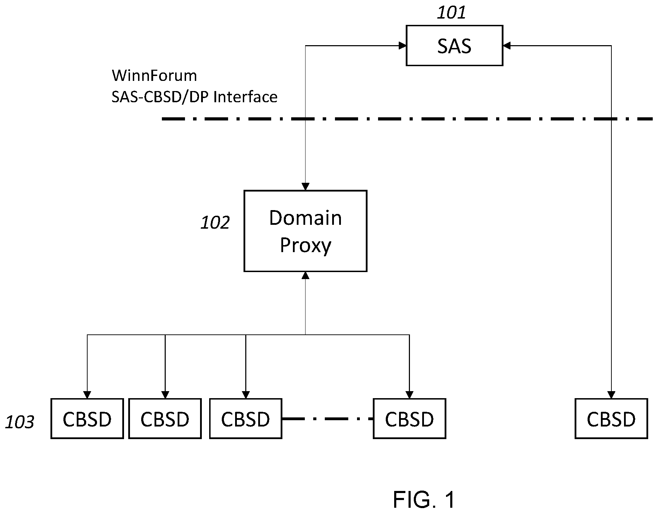

As shown in FIG. 1, which illustrates the CBRS architecture, the spectrum is allocated and controlled by Spectrum Access System (SAS) 101. The CBRS devices (CBSD) 103 and Domain Proxy (DP) 102 have an interface (referenced as "WinnForum SAS-CBSD/DP Interface" in FIG. 1) with the SAS 101 for this function. The interface is defined by WinnForum standard. The CBRS spectrum is divided into three tiers: 1) Incumbent Access; 2) Priority Access License (PAL); and 3) General Authorized Access (GAA). Incumbent Access tier is reserved for the existing government and military users in the 3.5 GHz band. Priority Access License (PAL) tier, which is designed for commercial users who have obtained a license for the frequency band, is used for large-scale wireless networks and high-speed broadband. General Authorized Access (GAA) tier, which is available for unlicensed users who can access the frequency band on a non-interference basis, is designed for small-scale wireless networks and IoT devices.

As per FCC Rule Part 96 CBRS, CBRS requirements stipulate that if an Incumbent Access user (CBSD) would like to use the spectrum in a geographical area, the SAS will instruct PAL and GAA CBSDs to shut down their transmissions within 60 sec, and the SAS will subsequently instruct PAL and GAA CBSDs to resume once the Incumbent Access CBSD is not active anymore.

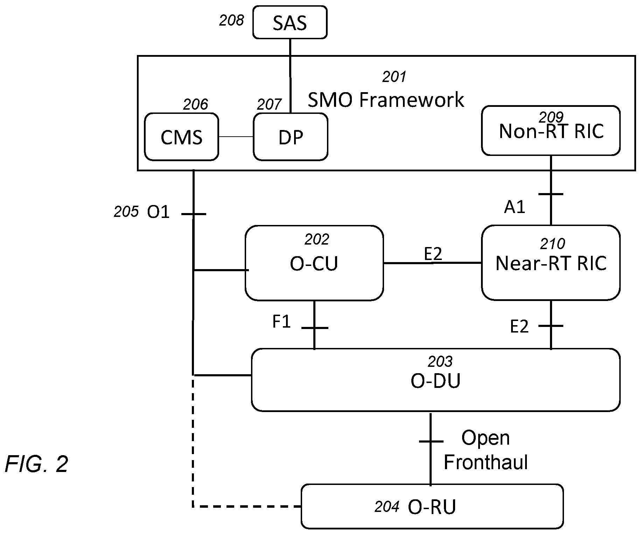

In O-RAN networks (as well as in modern RAN networks), the network functionalities are split as illustrated in FIG. 2. The illustrated network functionaliteis include Service Management and Orchestration (SMO) 201, O-RAN Central Unit (O-CU) 202, O-RAN Distributed Unit (O-DU) 203, O-RAN Radio Unit (O-RU) 204, O1 interface 205 connecting SMO 201 to O-CU 202, O-DU 203 and O-RU 204 (as well as other components which are not shown). SMO 201, which is a key element of the O-RAN architecture, provides a centralized platform for managing and orchestrating different network services. Cloud Management System (CMS) 206 is typically implemented in SMO 201 for management. DP 207 is typically located in the SMO 201 with a proprietary interface to CMS 206, as shown in FIG. 2. Alternatively, DP 207 can also be part of CMS 206, or DP 207 can be part of Non-Real-Time Radio Intelligent Controller (Non-RT RIC) 209. DP 207 has an external interface with SAS 208 shown in FIG. 2. In addition, Near-RT RIC 210 is connected to each of Non-RT RIC 209, O-CU 202, and O-DU 203, via A1, E2 and E2 interfaces, respectively.

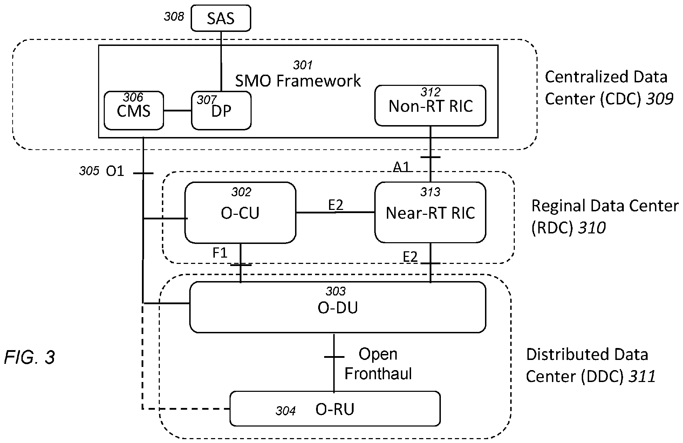

As illustrated in FIG. 3, O-RAN components described above are typically placed in different geographical locations, connected by a transport interface for O1 interface 305, which can be a wireline or wireless, such as a microwave connection. As shown in FIG. 3, CMS 306 and DP 307 of the SMO 301, along with Non-RT RIC 312, are usually located in a centralized data center (CDC) 309. O-CU 302 can be at a reginal data center (RDC) 310 as shown, or alternatively at the CDC 309. O-DU 303 and O-RU 304 are at the Distributed Data Center (DDC) 311. There can be multiple O-DUs, each controlling multiple O-RUs. CDC 309, RDC 310 and DDC 311 can be considered as several O-Cloud in O-RAN terminology. In addition, Near-RT RIC 313 (of RDC 310) is connected to each of Non-RT RIC 312 (of CDC 309), O-CU 302 (of RDC 310), and O-DU 303 (of DDC 311), via A1, E2 and E2 interfaces, respectively.

The functionality of DP or CBSD can be implemented at the O-RU, but this implementation is not preferred because i) it will increase the cost of the radio and ii) the pooling of several CBSD to be served by a DP is complicated. Preferably, DP is used to represent CBSDs which are mapped to O-RUs, and DP is placed near CMS in the CDC. The functionality to shut down or restart O-RU transmission is performed by the O-DU.

In typical O-RAN, e.g., as shown in FIG. 3, the O1 interface 305 between CDC 309 and DDC 311 is considered an Operations and Management (O&M) interface, which is normally needed only for i) initial configuration of the radio cells (carrier served by O-RU), ii) any subsequent reconfigurations, and iii) for gathering the state information. After the cell has been configured, the cell operations can continue without any O&M connectivity because that connectivity is not needed to process any UE traffic. Therefore, the O1 interface does not need to be reliable, i.e., failure of the O1 interface will not impact the UE service. However, a failure of the O1 interface creates a challenge in CBRS because, when the communication interface for O1 305 between the CDC 309 and the DDC 311 breaks, the O-DU 303 would lose contact with the DP 307. In this case, if the SAS 308 requests the CBSD (e.g., O-RU 304) to shut down its transmission, then the O-DU 303 cannot comply and the CBRS does not comply with FCC regulation.

One conventional solution in response to the O1 interface breaking is for the O-DU to shut down the O-RU transmission immediately. However, this solution is not ideal because the CBSD has 60 seconds to comply, and the interface could recover before 60 seconds expire. In addition, shutting down (or locking) the O-RU would mean service interruption as all UEs would be disconnected from the O-RU.

If the O-RU has been shut down and the interface has recovered, one conventional solution is for the O-DU to restart the O-RU transmission immediately after the interface recovery. However, this solution is not ideal because the O-DU has been out of contact with the DP, and the SAS may have requested the DP to shut down the O-RU transmission. In this case, if the O-DU instructs the O-RU to restart the transmission without confirming with the DP first, then the CBSD does not comply with the FCC regulation.

Accordingly, there is a need for a system and method for optimized implementation of shutting down and restarting radio units in Open-RAN CBRS networks.

### SUMMARY

Accordingly, what is desired is a system and method to optimize implementation of shutting down and restarting radio units (e.g., O-RUs) in Open-RAN CBRS networks.

According to an example system and method of the present disclosure, to shut down and restart signal radiation of a CBRS O-RU deployed in an O-RAN-based CBRS network, the following are implemented in the network: a centralized data center (CDC); multiple Distributed Data Centers (DDC's); CMS and DP located at the CDC; CBRS Interface Monitoring and Alert module located at the DDC (D-CIMA); at least one O-DU and multiple O-RUs located at each DDC, each DDC communicating with the CDC via an O1 interface. In the case the O1 interface fails and the failure lasts more than specified Sd seconds threshold, the D-CIMA alerts all associated O-DUs in the DDC so the O-DUs can shut down their O-RUs' transmission. The C-CIMA at the CDC alerts the status to the CMS and DP when the failure lasts more than specified Sc seconds threshold (this is for later recovery procedure). When the O1 interface is restored and stable for more than specified Rc time threshold, the C-CIMA at the CDC alerts CMS and DP of the recovery. The DP confirms the spectrum authorization and notifies the CMS, at which point the CMS sends restart instruction to the O-DUs only if the spectrum is still authorized.

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating the CBRS architecture.
FIG. 2 is a block diagram illustrating the O-RAN architecture with CMS and DP.
FIG. 3 is a block diagram illustrating typical deployments of O-RAN components in different geographical locations.
FIG. 4 is a block diagram illustrating various components of an example embodiment of a system and a method to shut down and restart signal radiation of an O-RU deployed in an O-RAN network.
FIG. 5 is a block diagram illustrating various components of another example embodiment of a system and a method to shut down and restart signal radiation of an O-RU deployed in an O-RAN network.

### DETAILED DESCRIPTION

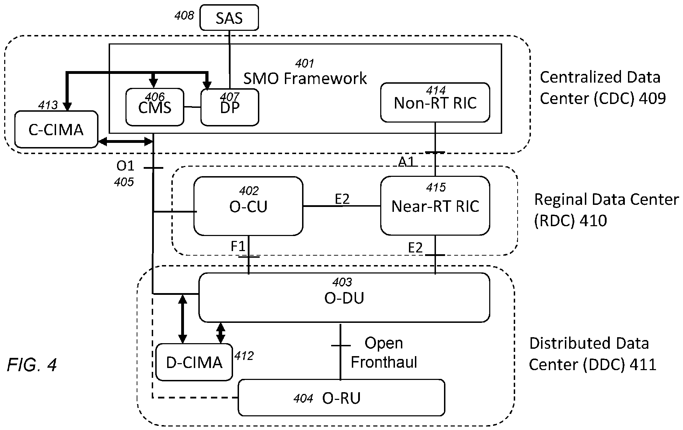

In example embodiments of the system and method according to the present disclosure, optimized implementation of shutting down and restarting of a radio unit (e.g., O-RU) in O-RAN CBRS networks is provided. As shown in FIG. 4, which is a is a block diagram illustrating a first example embodiment, O1 interface 405 connects CDC 409 to multiple DDCs 411 (only one is shown for the sake of clarity). The CDC 409 includes CMS 406 and DP 407. Each DDC contains at least one O-DU 403 (could be multiple O-Dus), and each O-DU 403 controls multiple ORUs 404 (only one is shown for the sake of clarity). In addition, Near-RT RIC 415 (of RDC 410) is connected to each of Non-RT RIC 414 (of CDC 409), O-CU 402 (of RDC 410), and O-DU 403 (of DDC 411), via A1, E2 and E2 interfaces, respectively. FIG. 4 additionally illustrates a D-CIMA 412 located in the DDC 411, which D-CIMA 412 monitors the O1 interface status. The monitoring service/functionality can be implemented according to ORAN Working Group 10 and 3GPP TS 28.537 standards, which rely on well-known heartbeat exchanges between two ends of the O1 interface (e.g., the implementation of the hearbeat exchange can use any open-source software, such as Bidirectional Forwarding Detection (BFD)), but the monitoring functionality is not deemed essential to the present disclosure.

In the example embodiment shown in FIG. 4, each O-DU 403 manages multiple O-RUs 404 and can shut down or restart the transmission of the O-RUs 404. One D-CIMA 412 (located in DDC 411) can monitor multiple O1 Interfaces to each O-DU (if there are multiple O-DUs at the DDC). Alternatively, multiple D-CIMAs can be provided such that each D-CIMA monitors an associated O1 Interface for each O-DU. After the D-CIMA 412 detects a failure of O1 Interface for more than Sd seconds, D-CIMA 412 notifies all O-DUs 403 in the DDC 411 associated with the O1 Interface 405. In response to the notification, each O-DU 403 shuts down or locks the O-RUs 404 to stop the O-RUs from radiating the signal. Sd is configurable based on the required time from the SAS 408 and the latency from the time the alert is generated to the time the shutdown is completed by the O-RU.

In the example embodiment of FIG. 4, a second CIMA, C-CIMA 413 located in CDC 409, also monitors the O1 Interface 405. After the C-CIMA 413 detects a failure of O1 Interface 405 for more than Sc seconds, it notifies CMS 406 and DP 407 in CDC 409 to update the state change of the O1 Interface 405. Sc is configurable based on the required time from the SAS and the latency from the time the notification from the C-CIMA 413 is generated to the time the CMS 406 and DP 407 complete the state change.

After the C-CIMA 413 at the CDC 409 detects that O1 Interface 405 has recovered for more than Rc seconds, the C-CIMA 413 alerts the CMS 406 of the recovery. In response, the CMS 406 requests spectrum authorization status of the O-RU 404 from the DP 407. If the spectrum is still authorized, the CMS 406 sends a restart command to the O-DU 403, which in turn restarts the O-RU 404. If the spectrum is not authorized, the CMS 406 does not send the restart command to the O-DU 403, and the O-RU 404 remains in the shut-down state. If the spectrum has been changed by the SAS 408, the CMS 406 sends a new spectrum configuration and the restart command to the O-DU 404, which in turn applies the new spectrum configuration and restarts the O-RU 404.

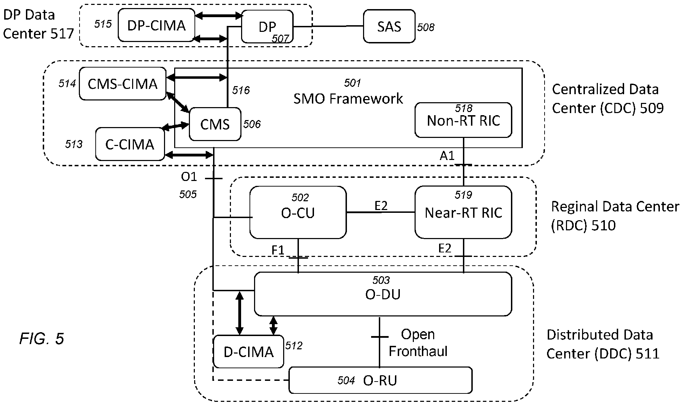

According to another example embodiment illustrated in FIG. 5, CMS 506 is located at CDC 509, and DP 507 is located at DP Data Center 516, with an interface 516 connecting CMS 506 to DP 507. In this case, CMS-CIMA 514 (of CDC 509) and DP-CIMA 515 (of DP Data Center 516) are provided at the ends of the interface 516 connecting CMS 506 and DP 507, respectively. If the interface 516 fails for more than threshold Scm time period, the CMS-CIMA 514 alerts the CMS 506 of the failure, and the CMS 506 will send a shutdown command to the O-DU 503 via the O1 interface 505. In response to the shutdown command, the O-DU 503 will shut down O-RU 504 signal radiation. Scm is configurable based on the required time from the SAS 508 and the latency from the time of the alert being generated by the CMS-CIMA 514 to the time the shutdown is completed by the O-RU 504.

In the example embodiment of FIG. 5, the DP-CIMA 515 (of DP Data Center 516) also monitor the interface 516 and sends an alert to the DP 507 after Sdp time period of continued failure of the interface 516. The DP 507 will update the status of the interface 516 to the CMS 506 and continue to exchange Heartbeat with the SAS 508. Sdp is configurable based on the required time from the SAS and the latency from the time the alert is generated by the DP-CIMA 515 to the time the DP 507 completes the state change. When the DP-CIMA 515 observes that the interface 516 has recovered and has been stable for more than Rdp time period, the DP-CIMA 515 informs the DP 507 of the recovery. Rdp time period is configurable based on the required time to ensure the interface 516 is stable. If the spectrum is still authorized (which determination is made based on the heartbeat exchanged with the SAS 508 in the above step for determining the interface recovery), the DP 507 informs the CMS 506 of the spectrum authorization. The CMS 506 sends a restart command to the O-DU 503, which in turn restarts the O-RU 504. If the spectrum is not authorized, the O-RU 504 remains shut-down.

In the example embodiment shown in FIG. 5, if either the O1 interface 505 or the interface 516 between the CMS 506 and the DP 507 remains in the failed state for an extended period of time (e.g., exceeding a specified threshold duration), the DP 507 can send a relinquishment of the spectrum to the SAS 508 so that the SAS 508 can allocate the spectrum to other CBSD users. When the interface 516 between the CMS 506 and the DP 507 has been restored, the DP 507 can request a new spectrum (from the SAS). Alternatively, if either the O1 interface 505 or the interface 516 remains in the failed state for an extended period of time, the DP 507 can retain the spectrum for the O-RU 504, but stop exchanging the Heartbeat messages with the SAS 508, thereby minimizing waste of resources on the Heartbeat. After both O1 interface 505 and the interface 516 recover, the DP 507 resumes the Heartbeat exchange with the SAS 508. After the SAS 508 confirms the spectrum is still authorized, the DP 507 notifies the CMS 506 of the spectrum authorization. The CMS 506 sends a restart command to the O-DU 503, which in turn restarts the O-RU 504.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 6G and other similar wireless networks in which BWP concept is applicable. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A system for optimizing at least one of shut-down and restart of an Open Radio Access Network (O-RAN) radio unit (O-RU) deployed in an O-RAN Citizens Broadband Radio Service (CBRS) network serving at least one CBRS device (CBSD), comprising:
spectrum access system (SAS);
CBRS Domain Proxy (DP) located in a Centralized Data Center (CDC);
Cloud Management Service (CMS);
a first CBRS Interface Monitoring and Alert (CIMA) located in the CDC;
a second CIMA located in a Distributed Data Center (DDC);
at least one O-RAN Distributed Unit (O-DU) located in the DDC;
a plurality of O-RAN Radio Units (O-RUs) located in the DDC; and
an O1 interface connecting the CDC and DDC;
wherein:
i) the second CIMA located in the DDC is configured to monitor the O1 interface connection to the DDC, and in the case a failure of the O1 interface lasting longer than a specified time duration Sd is detected, alert the at least one O-DU regarding the failure of the O1 interface; and
ii) in response to the alert from the second CIMA, the at least one O-DU shuts down the plurality of O-RUs.

2. The system of claim 1, wherein the time duration Sd is specified based on i) a required time dictated by the SAS, and ii) an expected latency from the time the alert from the second CIMA is generated to the time when shut-down of the O-RUs is completed.

3. The system of claim 2, wherein:
i) the DP is located in the CDC; and
ii) the first CIMA located in the CDC is configured to monitor the O1 interface connection to the DDC, and in the case a failure of the O1 interface lasting longer than a specified time duration Sc is detected, alert the CMS and the DP to update change of state of the O-RUs, and wherein SC is specified based on i) a required time dictated by the SAS, and ii) an expected latency from the time the alert from the first CIMA is generated to the time when the CMS and the DP complete the update of the change of state of the O-RUs.

4. The system of claim 1,wherein the CMS is located in the CDC, and wherein a restart procedure for the O-RUs is implemented by at least the first CIMA located in the CDC and the CMS as follows:
i) the first CIMA located in the CDC is configured to monitor the O1 interface connection to the DDC, and in the case a recovery of the O1 interface lasting more than a specified time duration Rc is detected, alert the CMS of the O1 interface recovery, wherein Rc is specified based on a required time to ensure stabilization of the O1 interface;
ii) the CMS is configured to request spectrum authorization status for the O-RU from the DP; and
one of:
iii) in the case spectrum authorization is still valid, the CMS is configured to send a restart command to the O-DU to restart the O-RUs; or
iv) in the case of change of spectrum by the SAS, the CMS is configured to send a new spectrum configuration and the restart command to the O-DU, whereby the O-DU applies the new configuration and restarts the O-RUs.

5. The system of claim 1, further comprising:
a third CIMA located in the CDC; and
a fourth CIMA located in a DP data center distinct from the CDC;
wherein:
i) the CMS is located in the CDC, and the DP is located in the DP data center, with a second interface connecting the CMS and the DP;
ii) the third CIMA located in the CDC is configured to monitor the second interface, and in the case the second interface fails for a duration exceeding a specified time duration Scm, alert the CMS of the failure of the second interface, wherein Scm is specified based on a required time dictated by the SAS and an expected latency from the time the alert from the third CIMA is generated to the time when shut-down of the O-RUs is completed;
iii) in response to the alert from the third CIMA, the CMS in configured to send a shut-down command to the O-DU via the O1 interface; and
iv) in response to the shut-down command, the O-DU shuts down the O-RUs.

6. The system of claim 5, wherein:
the fourth CIMA located in the DP data center is configured to monitor the second interface, and in the case the second interface fails for a duration exceeding a specified time duration Sdp, alert the DP of the failure of the second interface, wherein Sdp is specified based on a required time dictated by the SAS and an expected latency from the time the alert from the fourth CIMA is generated to the time when the DP completes an update of status of the second interface; and
in response to the alert from the fourth CIMA, the DP is configured to update the status of the second interface and continue to exchange heartbeats with the SAS to keep spectrum grant authorized.

7. The system of claim 6, wherein:
in the case the fourth CIMA located in the DP data center detects recovery of the second interface for a duration exceeding a specified time duration Rdp, the fourth CIMA is configured to alert the DP of the recovery, wherein Rdp is specified based on a time duration to ensure stabilization of the second interface; and
in the case spectrum authorization is still valid, the DP is configured to notify the CMS of the spectrum authorization;
in response to the spectrum authorization notification, the CMS is configured to send a restart command to the O-DU to restart the O-RUs.

8. The system of claim 5, wherein:
in the case one of the failure of the O1 interface or the failure of the second interface exceeds a specified threshold for an extended period of time, the DP is configured to send a relinquishment of spectrum notification to the SAS;
in response to the relinquishment of spectrum notification, the SAS is configured to reallocate the spectrum from an original CBSD to a different CBSD; and
in the case the second interface is subsequently recovered, the DP is configured to request a new spectrum from the SAS.

9. A method for optimizing at least one of shut-down and restart of an Open Radio Access Network (O-RAN) radio unit (O-RU) deployed in an O-RAN Citizens Broadband Radio Service (CBRS) network serving at least one CBRS device (CBSD), said O-RAN CBRS network comprising a spectrum access system (SAS), a CBRS Domain Proxy (DP) located in a Centralized Data Center (CDC), a Cloud Management Service (CMS), a first CBRS Interface Monitoring and Alert (CIMA) located in the CDC, a second CIMA located in a Distributed Data Center (DDC), at least one O-RAN Distributed Unit (O-DU) located in the DDC, a plurality of O-RAN Radio Units (O-RUs) located in the DDC, and an O1 interface connecting the CDC and DDC, the method comprising:
monitoring, by the second CIMA located in the DDC, the O1 interface connection to the DDC;
in the case a failure of the O1 interface lasting longer than a specified time duration Sd is detected, sending by the second CIMA to the at least one O-DU an alert regarding the failure of the O1 interface; and
shutting down, by the at least one O-DU, the plurality of O-RUs in response to the alert from the second CIMA.

10. The method of claim 9, wherein the time duration Sd is specified based on i) a required time dictated by the SAS, and ii) an expected latency from the time the alert from the second CIMA is generated to the time when shut-down of the O-RUs is completed.

11. The method of claim 10, wherein the DP is located in the CDC, and the method further comprising:
monitoring, by the first CIMA located in the CDC, the O1 interface connection to the DDC; and
in the case a failure of the O1 interface lasting longer than a specified time duration Sc is detected, sending by the first CIMA located in the CDS an alert to the CMS and the DP to update change of state of the O-RUs;
wherein Sc is specified based on i) a required time dictated by the SAS, and ii) an expected latency from the time the alert from the first CIMA is generated to the time when the CMS and the DP complete the update of the change of state of the O-RUs.

12. The method of claim 9, wherein the CMS is located in the CDC, and the method further comprising:
implementing a restart procedure for the O-RUs by at least the first CIMA located in the CDC and the CMS as follows:
i) monitoring, by the first CIMA located in the CDC, the O1 interface connection to the DDC, and in the case a recovery of the O1 interface lasting more than a specified time duration Rc is detected, alerting the CMS of the O1 interface recovery, wherein Rc is specified based on a required time to ensure stabilization of the O1 interface;
ii) requesting, by the CMS, spectrum authorization status for the O-RU from the DP; and one of:
iii) in the case spectrum authorization is still valid, sending by the CMS a restart command to the O-DU to restart the O-RUs; or
iv) in the case of change of spectrum by the SAS, sending by the CMS a new spectrum configuration and the restart command to the O-DU, whereby the O-DU applies the new configuration and restarts the O-RUs.

13. The method of claim 9, wherein a third CIMA located in the CDC is provided, a fourth CIMA located in a DP data center distinct from the CDC is provided, the CMS is located in the CDC, and the DP is located in the DP data center, with a second interface connecting the CMS and the DP, and the method further comprising:
monitoring, by the third CIMA located in the CDC, the second interface, and in the case the second interface fails for a duration exceeding a specified time duration Scm, alerting the CMS of the failure of the second interface, wherein Scm is specified based on a required time dictated by the SAS and an expected latency from the time the alert from the third CIMA is generated to the time when shut-down of the O-RUs is completed;
in response to the alert from the third CIMA, sending by the CMS a shut-down command to the O-DU via the O1 interface; and
in response to the shut-down command, shutting down the O-RUs by the O-DU.

14. The method of claim 13, further comprising:
monitoring, by the fourth CIMA located in the DP data center, the second interface, and in the case the second interface fails for a duration exceeding a specified time duration Sdp, alerting the DP of the failure of the second interface, wherein Sdp is specified based on a required time dictated by the SAS and an expected latency from the time the alert from the fourth CIMA is generated to the time when the DP completes an update of status of the second interface; and
in response to the alert from the fourth CIMA, performing the following by the DP: i) updating the status of the second interface; and ii) exchanging heartbeats with the SAS to keep spectrum grant authorized.

15. The method of claim 14, further comprising:
in the case the fourth CIMA located in the DP data center detects recovery of the second interface for a duration exceeding a specified time duration Rdp, alerting the DP of the recovery by the fourth CIMA, wherein Rdp is specified based on a time duration to ensure stabilization of the second interface;
in the case spectrum authorization is still valid, notifying the CMS of the spectrum authorization by the DP; and
in response to the spectrum authorization notification, sending a restart command to the O-DU by the CMS to restart the O-RUs.

16. The method of claim 13, further comprising:
in the case one of the failure of the O1 interface or the failure of the second interface exceeds a specified threshold for an extended period of time, sending by the DP a relinquishment of spectrum notification to the SAS;
in response to the relinquishment of spectrum notification, reallocating the spectrum from an original CBSD to a different CBSD by the SAS; and
in the case the second interface is subsequently recovered, requesting by the DP a new spectrum from the SAS.
